# FASCICULE DE BREVET EUROPEEN

(11) **EP 3 207 221 B1**
(45) Date de publication et mention de la délivrance du brevet: **19.07.2023**
(21) Numéro de dépôt: 15804160.8
(22) Date de dépôt: 15.10.2015
(51) Int. Cl.: F01D 11/00

(54) **ENSEMBLE ROTATIF POUR TURBOMACHINE ET TURBOMACHINE**
DREHENDE BAUGRUPPE FÜR EINE STRÖMUNGSMASCHINE UND STRÖMUNGSMASCHINE
ROTATING ASSEMBLY FOR TURBOMACHINE AND TURBOMACHINE

(30) Priorité: 15.10.2014 FR 1459889; 15.10.2014 FR 1459888
(43) Date de publication de la demande: 23.08.2017
(73) Titulaire: SAFRAN AIRCRAFT ENGINES, 75015 Paris (FR); Safran Ceramics, 33185 Le Haillan (FR)
(72) Inventeur: EVAIN, Gaël, Frédéric, Claude, Cyrille, 77550 Moissy-cramayel Cedex (FR); CARLOS, Pierre-Louis, Alexandre, 77550 Moissy-cramayel Cedex (FR); GROLEAU, Claire, Charlotte, 77550 Moissy-cramayel Cedex (FR); LEDUC, Mathieu, Louis, Jean, 77550 Moissy-cramayel Cedex (FR); MARSAL, David, 33240 Saint Andre De Cubzac (FR)
(74) Mandataire: Cabinet Beau de Loménie
(86) Numéro de dépôt international: PCT/FR2015/052776
(87) Numéro de publication internationale: WO 2016/059348

(56) Documents cités:
- FR-A1- 2 636 672
- US-A- 3 019 035
- US-A- 3 019 035
- US-A1- 2012 051 917
- US-A1- 2012 051 917

## Description

### DOMAINE DE L'INVENTION

Le présent exposé concerne un ensemble rotatif pour turbomachine, de préférence du type turbine, permettant un meilleur contrôle du jeu radial entre deux pièces coaxiales. Le présent exposé s'intéresse principalement au domaine des turboréacteurs d'avion mais peut s'appliquer de manière générale à tout type de turbomachine, dans le domaine aéronautique ou non. La présente invention concerne un ensemble rotatif pour turbomachine et une turbomachine.

### ETAT DE LA TECHNIQUE ANTERIEURE

Dans une turbine de turbomachine, le rotor est entraîné par l'air de la veine qui se détend au niveau des aubes rotoriques, cédant à cette occasion une partie de son énergie à ces dernières. Toutefois, on constate fréquemment qu'une part de l'air de veine, généralement appelée « bypass », contourne les plates-formes internes et externes des aubages et ne se détend donc pas au niveau des aubages, ce qui réduit les performances de la turbine.

Afin de limiter cette circulation d'air inefficace qui contourne les aubes, les têtes des aubes mobiles du rotor sont généralement équipées de léchettes adaptées pour entailler une piste de matériau abradable portée par le stator, assurant ainsi l'étanchéité de la veine en tête des aubes mobiles. Un dispositif analogue est prévu pour les aubes fixes (ou distributeurs) : une virole dite « labyrinthe » est en effet prévue entre deux roues d'aubes mobiles et porte des léchettes adaptées pour entailler une piste de matériau abradable portée par le pied des aubes fixes, assurant ainsi l'étanchéité de la veine au pied des aubes fixes.

Toutefois, pour que ce système soit efficace, il est important de minimiser les jeux radiaux séparant les léchettes des pistes abradables. Or, une température élevée et hétérogène régnant dans la turbine, des phénomènes de dilatation différentielle de certains éléments peuvent survenir et modifier les jeux entre certaines pièces, en particulier entre certaines pièces réalisées dans des matériaux différents ou situées plus ou moins à proximité de la veine d'air et donc soumises à des températures plus ou moins élevées. Par exemple, le déplacement radial de la virole labyrinthe est inférieur à celui des aubes fixes : dès lors, on observe une augmentation du jeu séparant les léchettes portées par la virole labyrinthe de la piste abradable portée par les aubes fixes, et donc une augmentation de la circulation de contournement et une réduction des performances de la turbine.

Pour résoudre ce problème et rectifier ces jeux en fonctionnement, un système de vannes permet aujourd'hui de faire circuler de l'air froid le long de la paroi extérieure du carter de turbine afin de refroidir ce dernier et donc de contrôler sa dilatation, ce qui influe sur les jeux radiaux, les aubes fixes étant fixées sur ce carter. Toutefois, un tel système a l'inconvénient de prélever un débit important d'air frais qui ne peut alors servir à d'autres équipements de la turbomachine.

Un autre inconvénient des turbines actuelles réside dans le fait que la dilatation différentielle apparaissant entre la virole labyrinthe, ou l'anneau portant la piste abradable, et les organes sur lesquels ils sont montés engendre des contraintes mécaniques importantes à l'interface entre ces pièces, entraînant leur endommagement précoce et donc une réduction de leur durée de vie.

Le document US 2012/0051917 décrit un joint inter-étage muni de léchettes.

Il existe donc un réel besoin pour un ensemble rotatif pour turbomachine qui soit dépourvu, au moins en partie, des inconvénients inhérents aux configurations connues précitées.

### PRESENTATION DE L'INVENTION

La présente invention est définie dans les revendications.

Le présent exposé concerne un ensemble rotatif pour turbomachine, du type turbine ou compresseur, comprenant un rotor comportant au moins deux étages rotoriques consécutifs munis d'une pluralité d'aubes mobiles, et une virole de rotor, annulaire, reliant lesdits deux étages rotoriques consécutifs ; un stator comportant au moins un étage statorique, muni d'une pluralité d'aubes fixes, prévu entre lesdits deux étages rotoriques consécutifs, et un anneau de stator, annulaire, monté sur lesdites aubes fixes ; dans lequel l'un des éléments parmi la virole de rotor et l'anneau de stator porte au moins une léchette configurée pour coopérer avec une piste abradable portée par l'autre desdits éléments ; la virole de rotor comporte, à chacune de ses extrémités amont et aval, soit une portion de contact du type axial s'étendant au-dessous d'une butée de l'étage rotorique correspondant, soit une portion de contact du type oblique reposant sur une surface d'appui oblique de l'étage rotorique correspondant.

Dans le présent exposé, les termes « longitudinal », « transversal », « inférieur », « supérieur », « sous », « sur », et leurs dérivés sont définis par rapport à la direction principale des aubes ; les termes « axial », « radial », « tangentiel », « intérieur », « extérieur » et leurs dérivés sont quant à eux définis par rapport à l'axe principal de la turbomachine ; on entend par « plan axial » un plan passant par l'axe principal de la turbomachine et par « plan radial » un plan perpendiculaire à cet axe principal ; enfin, les termes « amont » et « aval » sont définis par rapport à la circulation de l'air dans la turbomachine.

Dans un tel ensemble rotatif, grâce à ces portions de contact de la virole de rotor, traditionnellement appelée « virole labyrinthe », la virole de rotor est montée entre les étages rotoriques mais les mouvements de dilatation radiale des étages rotoriques n'influent pas ou très peu sur la position de la virole de rotor.

En effet, dans le cas d'une portion de contact du type axial, la butée de l'étage rotorique permet, à l'arrêt, de retenir la virole de rotor à l'encontre de la gravité mais, en fonctionnement, lorsque l'étage rotorique dans son ensemble se dilate sous l'effet de la chaleur apportée par l'air de la veine, la butée se déplace vers l'extérieur en s'éloignant de la portion de contact de la virole de rotor : le mouvement de dilatation de l'étage rotorique n'est donc pas communiqué à la virole de rotor.

Dans le cas d'une portion de contact du type oblique, cette dernière repose cette fois sur la surface d'appui oblique de l'étage rotorique : ainsi, lorsque l'étage rotorique se dilate sous l'effet de la chaleur, la surface d'appui de déplace vers l'extérieur et entraîne avec elle la virole de rotor. Toutefois, simultanément, l'ensemble rotatif dans son ensemble se dilate également axialement, ce qui augmente la distance séparant les deux étages rotoriques consécutifs : dès lors, la portion de contact du type oblique de la virole de rotor glisse le long de la surface oblique de l'étage rotorique et redescend donc vers l'intérieur. On peut alors régler l'inclinaison de la surface d'appui et de la portion de contact afin de contrôler le déplacement radial total de la virole de rotor qui est la somme de ces deux contributions ; on peut notamment chercher à annuler sensiblement ce déplacement radial.

Ainsi, la dilatation des étages rotoriques, généralement importante, n'influe plus ou presque plus sur la position radiale de la virole de rotor : cette position est désormais régie uniquement par les propriétés propres à la virole de rotor (notamment son coefficient de dilatation thermique) et sa température et. Ainsi, il est facile de contrôler la position de la virole de rotor et de limiter le jeu séparant les léchettes et la bande abradable coïncidente en agissant sur ces paramètres, notamment en choisissant un matériau à faible coefficient de dilatation thermique.

En outre, grâce à une telle configuration, la virole de rotor et les étages rotoriques peuvent se dilater de manière différente sans que des contraintes mécaniques radiales n'apparaissent à l'interface entre ces pièces, ce qui prolonge la durée de vie de l'ensemble rotatif.

On note de plus que la butée, dans le cas du contact du type axial, ou la surface de contact, dans le cas du contact du type oblique, permettent d'éviter que de l'air de la veine ne contourne la virole de rotor et ne pénètre dans l'espace inter-disques.

Dans certains modes de réalisation, le rotor est configuré de manière à bloquer axialement la virole de rotor ou à la rappeler vers une position axiale stable. On s'assure ainsi que la position axiale de la virole soit stable lors du fonctionnement de l'ensemble rotatif et qu'elle continue ainsi à assurer l'étanchéité de l'espace inter-disques. En particulier, par construction, dans le cas d'un contact du type oblique, la surface d'appui oblique de l'étage rotorique rappelle automatiquement la virole de rotor qui glisse sur cette dernière vers une position stable.

Dans certains modes de réalisation, la virole de rotor comprend une portion d'extrémité, formant portion de contact du type axial, qui s'étend radialement vers l'extérieur et s'engage dans une portion de crochet avançant axialement puis vers l'intérieur depuis une partie de base de l'étage rotorique correspondant. La portion de crochet bloque axialement la virole de rotor mais laisse libre un déplacement relatif axial jusqu'à la butée formée par le creux du crochet.

Dans certains modes de réalisation, la virole de rotor comprend une portion d'extrémité, formant portion de contact du type axial, qui s'étend axialement et s'engage sous une saillie avançant axialement depuis une partie de base de l'étage rotorique correspondant.

Dans certains modes de réalisation, une butée de l'étage rotorique s'étend depuis le pied d'une aube mobile ou depuis un muret ou un flasque reliant les pieds des aubes mobiles. Lorsque la partie de base de l'étage rotorique est un muret ou un flasque, elle s'étend de préférence à 360°, de manière continue ou sectorisée, le long de cet élément.

Dans certains modes de réalisation, une portion de contact du type oblique possède la même inclinaison que la surface d'appui oblique de l'étage rotorique correspondant.

Dans certains modes de réalisation, l'inclinaison de la portion de contact de type oblique par rapport à l'axe principal de l'ensemble rotatif est compris entre 15 et 75°, de préférence entre 35 et 65°. Dans une telle plage de valeur, le glissement de la virole de rotor vers l'intérieur le long de la surface de contact oblique, causé par la dilatation axiale de l'ensemble rotatif, compense de manière assez précise le déplacement vers l'extérieur causé par la dilatation radiale des étages rotoriques.

Dans certains modes de réalisation, une surface d'appui oblique d'un étage rotorique est la surface externe d'une saillie avançant depuis une partie de base de l'étage rotorique, de préférence depuis le pied d'une aube mobile ou depuis un muret ou un flasque reliant les pieds des aubes mobiles. Cette saillie peut prendre la forme d'une nervure annulaire s'étendant à 360° de manière continue ou sectorisée.

Dans certains modes de réalisation, une surface d'appui oblique d'un étage rotorique est la surface externe d'une virole d'appui rapportée sur ou formant partie intégrante d'une partie de base de l'étage rotorique. Cette virole d'appui est de préférence continue sur 360° ou fendue.

Dans certains modes de réalisation, la virole d'appui comporte une portion d'extrémité qui s'étend radialement vers l'extérieur et s'engage dans une portion de crochet avançant axialement puis vers l'intérieur depuis la partie de base de l'étage rotorique. Il s'agit d'une manière de fixer la position de cette virole d'appui.

Dans certains modes de réalisation, le rotor comprend un dispositif d'entraînement permettant d'entraîner la virole de rotor en rotation lorsque les étages rotoriques tournent. En fonctionnement, la virole de rotor tourne alors solidairement avec les étages rotoriques, ce qui assure un fonctionnement adéquat du rotor.

Dans certains modes de réalisation, le dispositif d'entraînement comprend des saillies d'entraînement portées, pour certaines, par un élément solidaire des étages rotoriques et, pour d'autres, par la virole de rotor et configurées pour coopérer les unes avec les autres afin d'entraîner la virole de rotor en rotation lorsque les étages rotoriques tournent. De cette manière, lorsque les étages rotoriques tournent, les saillies des étages rotoriques poussent et entraînent les saillies de la virole de rotor sans pour autant bloquer la liberté de déplacement radial de la virole de rotor.

Dans certains modes de réalisation, chaque étage rotorique comprend un disque sur lequel sont montées les aubes mobiles de l'étage rotorique correspondant, une virole inter-disques reliant les disques des deux étages rotoriques consécutifs, et le dispositif d'entraînement comprend des saillies d'entraînement prévues, pour certaines, sur la virole inter-disques et, pour d'autres, sous la virole de rotor et configurées pour coopérer les unes avec les autres afin d'entraîner la virole de rotor en rotation lorsque les étages rotoriques tournent. La virole de rotor peut notamment comprendre des pattes s'étendant vers l'intérieur en direction de la virole inter-disques et coopérant avec des bossages de la virole inter-disques.

Dans certains modes de réalisation, un jeu est laissé entre l'extrémité des saillies d'entraînement de la virole de rotor et la virole inter-disques. De cette manière, la virole de rotor n'est pas en appui sur la virole inter-disque et n'est donc pas déplacée radialement lorsque la virole inter-disque se dilate.

Dans certains modes de réalisation, le dispositif d'entraînement comprend des saillies d'entraînement prévues, pour certaines, sur la virole d'appui et, pour d'autres, sous la virole de rotor et configurées pour coopérer les unes avec les autres afin d'entraîner la virole de rotor en rotation lorsque les étages rotoriques tournent. Ces saillies sont de préférence des cannelures engrenant les unes dans les autres.

Dans certains modes de réalisation, le dispositif d'entraînement comprend des saillies d'entraînement portées, pour certaines, par la partie de base d'un étage rotorique et, pour d'autres, par la virole de rotor et configurées pour coopérer les unes avec les autres afin d'entraîner la virole de rotor en rotation lorsque les étages rotoriques tournent. Ces saillies sont de préférence des cannelures engrenant les unes dans les autres.

Dans certains modes de réalisation, la piste abradable est portée par l'anneau de stator et ladite au moins une léchette est portée par la virole de rotor. Les inventeurs ont en effet constaté que la configuration inverse est moins favorable.

Dans certains modes de réalisation, la virole de rotor est réalisée en matériau composite à matrice céramique. Ce matériau est plus léger, résiste bien à la chaleur et bénéficie d'un coefficient de dilatation inférieur à celui du métal. Sa bonne résistance à la chaleur permet notamment de réduire voire de supprimer la circulation de refroidissement de l'espace inter-disques et donc de réduire les prélèvements d'air en amont, ce qui améliore les performances de la turbomachine.

Dans certains modes de réalisation, les aubes mobiles, et plus généralement les étages rotoriques, sont réalisés en métal.

Dans certains modes de réalisation, l'anneau de stator est monté sur les aubes fixes par l'intermédiaire d'un dispositif d'accrochage mettant en jeu une pluralité de fentes radiales, chaque fente étant pratiquée dans une patte radiale de l'anneau de stator ou une patte radiale solidaire des aubes fixes, et une pluralité de pions, chaque pion étant porté par une patte radiale de l'anneau de stator ou une patte radiale solidaire des aubes fixes et configuré pour s'engager dans une fente correspondante desdites fentes radiales.

Dans un tel ensemble rotatif, grâce à ce dispositif d'accrochage, l'anneau de stator est monté sur les aubes fixes mais ses mouvements de dilatation/contraction radiaux sont totalement décorrélés de ceux des aubes fixes. En effet, lorsque la dilatation des aubes fixes est plus importante que celle de l'anneau de stator, en raison par exemple d'une température plus élevée ou d'un matériau ayant un coefficient de dilatation plus élevé, les pions du dispositif d'accrochage peuvent se déplacer librement dans les fentes radiales et ne communiquent donc pas leur mouvement à l'anneau de stator.

Dès lors, l'anneau de stator et les aubes fixes peuvent se dilater de manière différente sans que des contraintes mécaniques n'apparaissent à l'interface entre ces pièces, ce qui prolonge la durée de vie de l'ensemble rotatif.

En outre, la dilatation des aubes fixes, généralement importante, n'influe plus sur la position radiale de l'anneau de stator : cette position est désormais régie uniquement par les propriétés propres à l'anneau de stator, essentiellement sa température et son coefficient de dilatation thermique, et ne dépend plus d'une longue chaîne de côtes de différentes pièces montées les unes sur les autres. Ainsi, il est facile de contrôler la position de l'anneau de stator et de limiter le jeu séparant les léchettes et la bande abradable coïncidente en agissant sur ces paramètres, notamment en choisissant un matériau à faible coefficient de dilatation thermique. En outre, un système de refroidissement du carter dans le seul but de contrôler ces jeux est superflu puisque l'anneau de stator n'est plus lié radialement au carter, ce qui permet d'économiser de l'air frais pour d'autres équipements.

Il faut en tout état de cause souligner que si l'anneau de stator est libre de se déplacer en dilatation/contraction radiale autour de l'axe principal de l'ensemble rotatif, ce dispositif d'accrochage permet de bloquer tangentiellement l'anneau de stator : ce dernier ne peut donc tourner et reste ainsi solidaire du stator. Les pattes radiales solidaires des aubes fixes et portées par l'anneau de stator peuvent également permettre de caler axialement l'anneau de stator par rapport aux aubes fixes.

En outre, si au moins deux fentes radiales sont dirigées selon deux directions différentes, ce dispositif d'accrochage permet de centrer automatiquement l'anneau de rotor sur l'axe principal de l'ensemble rotatif.

Dans certains modes de réalisation, chaque fente radiale du dispositif d'accrochage est pratiquée dans une patte radiale de l'anneau de stator.

Dans certains modes de réalisation, chaque pion du dispositif d'accrochage est porté par une patte radiale solidaire des aubes fixes.

Dans certains modes de réalisation, un anneau de distributeur réunit les pieds des aubes fixes, cet anneau de distributeur comportant une bride radiale qui porte au moins certains pions du dispositif d'accrochage et/ou dans laquelle sont pratiquées au moins certaines fentes radiales du dispositif d'accrochage. Cet anneau de distributeur peut être continu sur 360°, fendu ou sectorisé. Cette bride radiale s'étend donc sur 360° et empêche ainsi le passage de l'air au niveau du dispositif d'accrochage, ce que ne permet pas une configuration comportant une pluralité de pattes distinctes et discontinues.

Dans certains modes de réalisation, l'anneau de distributeur est sectorisé et chacun de ses secteurs porte un pion. De préférence, chaque secteur réunit trois à cinq aubes fixes.

Dans certains modes de réalisation, l'anneau de stator comporte une première bride radiale qui porte au moins certains pions du dispositif d'accrochage et/ou dans laquelle sont pratiquées au moins certaines fentes radiales du dispositif d'accrochage. L'anneau de stator peut être continu sur 360° ou fendu ; cette bride radiale s'étend donc sur 360° et empêche le passage de l'air au niveau du dispositif d'accrochage, ce que ne permet pas une configuration comportant une pluralité de pattes distinctes et discontinues. En outre, il est possible de plaquer cette bride radiale contre la bride radiale de l'anneau de distributeur afin de caler axialement l'anneau de stator par rapport aux aubes fixes avec plus de facilité.

Dans certains modes de réalisation, l'anneau de stator comporte une deuxième bride radiale, chaque patte radiale solidaire des aubes fixes étant configurée pour s'engager entre les première et deuxième brides radiales de l'anneau de stator. Les pattes radiales solidaires des aubes fixes, prenant de préférence la forme d'une bride radiale, sont ainsi engagées entre les première et deuxième brides de l'anneau de stator : on assure ainsi le blocage axial de l'anneau de rotor par rapport aux aubes fixes.

Dans certains modes de réalisation, la deuxième bride radiale de l'anneau de stator est pleine, c'est-à-dire dépourvue d'ouverture. Ainsi, on entrave encore d'avantage la circulation d'air traversant le dispositif d'accrochage.

Dans certains modes de réalisation, au moins certaines fentes radiales sont des alésages oblongs s'étendant radialement.

Dans certains modes de réalisation, au moins certaines fentes radiales sont des encoches oblongues s'étendant radialement depuis le bord de leurs pattes radiales respectives.

Dans certains modes de réalisation, les fentes radiales du dispositif d'accrochage sont régulièrement espacées dans un plan radial tout autour de l'anneau de stator. On assure ainsi une configuration bénéficiant d'au moins certaines symétries, ce qui facilite le centrage de l'anneau de stator et améliore son comportement en fonctionnement.

Dans certains modes de réalisation, l'anneau de stator est réalisé en matériau composite à matrice céramique. Ce matériau est plus léger, résiste bien à la chaleur et bénéficie d'un coefficient de dilatation inférieur à celui du métal.

Dans certains modes de réalisation, les aubes fixes et l'anneau de distributeur sont réalisés en métal.

Dans certains modes de réalisation, l'anneau de stator et la virole de rotor possèdent des coefficients de dilatation thermique proches, de préférence égaux à ±10%, de préférence encore égaux à ±5%. De cette manière, ces deux pièces autoportées se déplacent sensiblement de la même manière en fonctionnement.

Dans certains modes de réalisation, l'anneau de stator et la virole de rotor sont réalisés dans le même matériau.

Le présent exposé concerne également un ensemble rotatif pour turbomachine, du type turbine ou compresseur, comprenant un rotor comportant au moins deux étages rotoriques consécutifs munis d'une pluralité d'aubes mobiles, et une virole de rotor, annulaire, reliant lesdits deux étages rotoriques consécutifs ; un stator comportant au moins un étage statorique, muni d'une pluralité d'aubes fixes, prévu entre lesdits deux étages rotoriques consécutifs, et un anneau de stator selon l'un quelconque des modes de réalisation présenté ci-dessus, monté sur lesdites aubes fixes ; dans lequel l'un des éléments parmi la virole de rotor et l'anneau de stator porte au moins une léchette configurée pour coopérer avec une piste abradable portée par l'autre desdits éléments.

Le présent exposé concerne en outre une turbomachine comprenant un ensemble rotatif selon l'un quelconque des modes de réalisation précédents.

Les caractéristiques et avantages précités, ainsi que d'autres, apparaîtront à la lecture de la description détaillée qui suit, d'exemples de réalisation de l'ensemble rotatif et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est une vue en coupe axiale d'un exemple de turboréacteur.
La FIG 2 est une vue en coupe axiale d'un premier exemple d'ensemble rotatif, qui n'est pas couvert par les revendications et ne fait pas partie de la présente invention.
La FIG 3 est une vue en coupe axiale d'un deuxième exemple d'ensemble rotatif.
La FIG 4 est une vue en coupe axiale d'un troisième exemple d'ensemble rotatif.
La FIG 5 est une vue en coupe axiale d'un quatrième exemple d'ensemble rotatif.
La FIG 6 est une vue en coupe radiale d'un premier exemple de virole fendue.
La FIG 7 est une vue en coupe radiale d'un deuxième exemple de virole fendue.
La FIG 8 est une vue en coupe radiale d'un troisième exemple de virole fendue.

### DESCRIPTION DETAILLEE D'EXEMPLE(S) DE REALISATION

Afin de rendre plus concret l'exposé, des exemples d'ensembles rotatifs sont décrits en détail ci-après, en référence aux dessins annexés. Il est rappelé que l'exposé ne se limite pas à ces exemples.

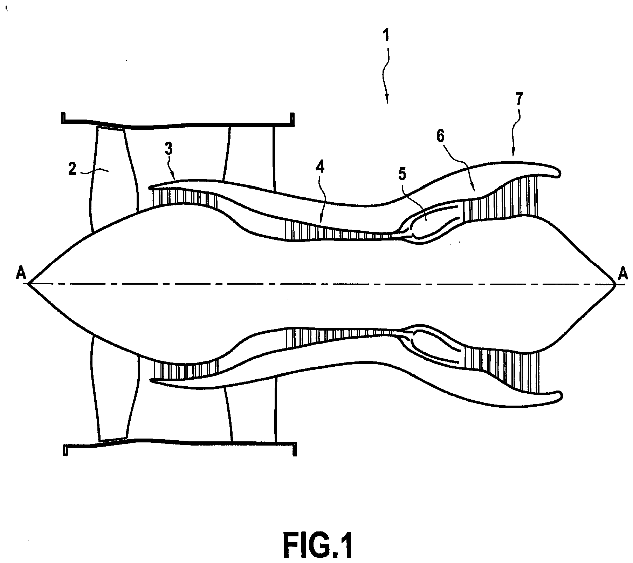

La FIG 1 représente, en coupe selon un plan vertical passant par son axe principal A, un turboréacteur à double flux 1 selon l'exposé. Il comporte, d'amont en aval, une soufflante 2, un compresseur basse pression 3, un compresseur haute pression 4, une chambre de combustion 5, une turbine haute pression 6 et une turbine basse pression 7.

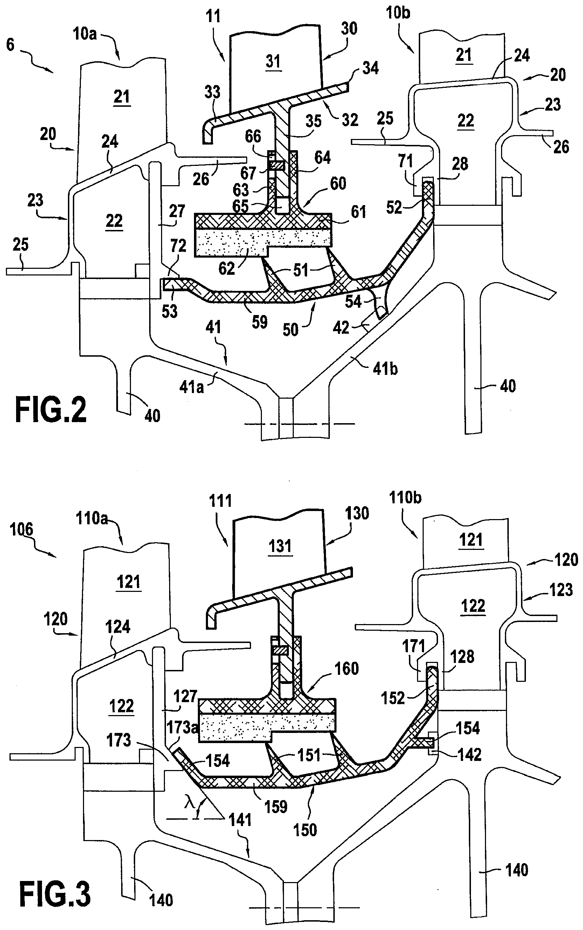

La FIG 2 représente, en coupe selon le même plan axial, une partie de cette turbine basse pression 7 selon un premier exemple de réalisation qui n'est pas couvert par les revendications et ne fait pas partie de la présente invention. On notera à titre incident que l'exposé s'appliquerait de manière tout à fait analogue à la turbine haute pression 6. Cette turbine 7 comporte une pluralité d'étages rotoriques 10a, 10b et d'étages statoriques 11 se succédant d'amont en aval, chaque étage rotorique 10a, 10b étant immédiatement suivi par un étage statorique 11. A fins de simplification, seuls un premier étage rotorique 10a, un étage statorique 11 et un deuxième étage rotorique 10b sont ici représentés.

Chaque étage rotorique 10a, 10b comporte une pluralité d'aubes rotoriques mobiles 20, comprenant chacune une pale 21 et un pied 22, montées sur un disque 40 accouplé à un arbre de la turbomachine 1. Chaque étage statorique 11 comprend quant à lui une pluralité d'aubes statoriques fixes 30, comprenant chacune une pale 31, montées sur le carter extérieur de la turbine 7.

Dans cet exemple de réalisation, les aubes rotoriques 20 ainsi que les aubes statoriques 30 comprennent essentiellement des matériaux métalliques.

Les disques 40 de chaque étage rotorique 10a, 10b sont reliés entre eux, deux à deux, par des viroles métalliques 41 appelées viroles inter-disques. Ces viroles 41 sont formées ici par deux demi-viroles 41a, 41b s'étendant chacune depuis un disque 40 et boulonnées l'une avec l'autre à leur point de rencontre.

Les pieds 22 des aubes 20 du premier étage rotorique 10a sont reliés par une structure annulaire de pied d'aube 23 formant des plates-formes 24, un becquet amont 25 et un becquet aval 26. Un flasque 27, annulaire, est de plus rapporté sur la face aval des pieds d'aube 22 de manière à les relier. Tous ces éléments sont réalisés de préférence en matériau métallique. Les plates-formes 24 définissent la limite intérieure de la veine d'air circulant dans la turbine 7.

Les pieds 22 des aubes 20 de deuxième étage rotorique 10b sont également munis d'une structure annulaire de pied d'aube 23 analogue formant des plates-formes 24, un becquet amont 25 et un becquet aval 26.

Les aubes 20 des premier et deuxième étages rotoriques 10a, 10b sont en outre reliées par une virole 50, dite virole labyrinthe. Cette virole labyrinthe 50, annulaire, est réalisée en matériau composite à matrice céramique (CMC) tissé 3D par une méthode de tissage dite « contour weaving ». Le « contour weaving » est une technique connue de tissage d'une texture fibreuse de forme axisymétrique dans laquelle la structure fibreuse est tissée sur un mandrin avec appel de fils de chaîne, le mandrin présentant un profil extérieur défini en fonction du profil de la texture fibreuse à réaliser.

Les pieds des aubes 30 de l'étage statorique 11 sont reliées par un anneau de distributeur 32, formé de plusieurs secteurs contigus, s'étendant à 360° autour de l'axe principal A. Cet anneau de distributeur 32, réalisé en métal, possède des projections amont 33 et aval 34 aptes à former des chicanes avec les béquets 26 et 25 des étages rotoriques amont 10a et aval 10b. Il possède en outre une bride radiale 35 s'étendant radialement vers l'intérieur tout le long de l'anneau de distributeur 32.

Un anneau porte-abradable 60 est rapporté sur l'anneau de distributeur 32 : il comprend une partie axiale 61, cylindrique de révolution, portant des pistes de matériau abradable 62, ainsi que deux brides radiales 63 et 64 s'étendant radialement vers l'extérieur. Ces deux brides radiales 63, 64 définissent entre elles deux un interstice 65 dont la largeur correspond sensiblement à la largeur de la bride radiale 35 de l'anneau de distributeur 32. La bride radiale aval 64 est pleine tandis que la bride radiale amont 63 comporte plusieurs alésages radiaux 66 régulièrement espacés autour de l'axe principal A : un alésage radial 66 peut par exemple être prévu en vis-à-vis du milieu de chaque secteur de l'anneau de distributeur 32.

L'anneau porte-abradable 60 est monté sur l'anneau de distributeur 30 en engageant la bride radiale 35 de l'anneau de distributeur 30 dans l'interstice 65 et en montant serré des pions 67 dans cette bride radiale 35 à travers les alésages radiaux 66 de la bride amont 63 de l'anneau porte-abradable 60. On bloque ainsi les positions axiale et tangentielle de l'anneau porte-abradable 60 par rapport à l'anneau de distributeur 32 tout en laissant libre son déplacement radial.

La virole labyrinthe porte des léchettes 51 dont les pointes sont au contact des pistes abradable 62 de l'anneau porte-abradable 60 afin d'entraver le passage de l'air au pied des aubes fixes 30. Cet anneau porte-abradable 60 est également réalisé en CMC tissé 3D ; on choisit de préférence un matériau identique à celui de la virole labyrinthe 50 afin d'avoir un coefficient de dilatation thermique identique entre ces deux pièces et donc d'assurer un contrôle continu des jeux séparant les léchettes 51 des pistes abradables 62.

Dans ce premier exemple, la virole labyrinthe 50 est monté entre les étages rotoriques 10a, 10b selon une configuration axial/axial. La virole 50, orientée sensiblement axialement dans sa portion médiane 59 portant les léchettes 51, se redresse vers l'extérieur en direction de son extrémité aval afin de former, à son extrémité aval, une portion de contact du type axial 52 s'étendant radialement. Cette portion de contact 52 est en appui axial contre un muret 28 de la structure de pied d'aube 23 de l'étage rotorique aval 10b et s'engage dans une portion de crochet 71 avançant axialement puis radialement vers l'intérieur à partir de ce muret 28, cette portion de crochet 71 étant donc située plus à l'extérieur que la portion de contact 52 de la virole 50 : la position axiale de la virole labyrinthe 50 est ainsi bloquée par rapport à l'étage rotorique aval 10b mais leurs déplacements relatifs radiaux restent libres. Cette portion de crochet 71 est symétrique de révolution par rapport à l'axe A de la turbine 7 et présente donc un profil constant sur toute la circonférence de la virole labyrinthe 50.

L'extrémité amont de la virole labyrinthe 50 présente quant à elle une seconde portion de contact du type axial 53 s'étendant axialement sous, c'est-à-dire plus à l'intérieur, une nervure 72 avançant axialement à partir du flasque 27 de l'étage rotorique amont 10a et s'étendant à 360° autour de l'axe A : les aubes mobiles 20 peuvent ainsi se dilater radialement sans entraîner le déplacement de la virole labyrinthe 50. En outre, lorsque la turbine 7 se dilate axialement, la virole labyrinthe 50 suit le mouvement axial de l'étage rotorique aval 10b mais son extrémité amont continue de chevaucher la nervure 72, limitant ainsi le passage de l'air de veine dans l'espace inter-disques.

La virole labyrinthe 50 comporte en outre des pattes 54, prévues régulièrement autour de l'axe A, qui s'étendent depuis sa surface intérieure vers la virole métallique inter-disques 41. Cette dernière possède des bossages 42, prévus régulièrement autour de l'axe A dans le même plan radial que les pattes 54 : ainsi, lorsque le rotor tourne, ces bossages 42 entrent en contact avec les pattes 54 et entraînent la virole labyrinthe 50 solidairement en rotation avec l'ensemble du rotor. Un jeu est toutefois laissé entre les pattes 54 et la virole inter-disques 41 afin que cette dernière ne pousse pas radialement la virole labyrinthe 50 lorsqu'elle se dilate.

La FIG 3 illustre un deuxième exemple d'ensemble rotatif 107 analogue en tout point au premier exemple sauf en ce qui concerne la virole labyrinthe 150 et son montage entre les étages rotoriques 110a et 110b, la virole labyrinthe 150 étant montée ici selon une configuration oblique/axial.

Dans ce deuxième exemple, l'extrémité aval de la virole labyrinthe 150 est analogue à celle du premier exemple : elle comprend également une portion de contact du type axial 152 s'étendant radialement et s'engageant dans une portion de crochet 171 avançant axialement puis radialement vers l'intérieur à partir d'un muret 128 de la structure de pied d'aube 123 de l'étage rotorique aval 110b.

En revanche, son extrémité amont forme une portion de contact du type oblique 154 qui s'étend selon une direction oblique dont l'inclinaison forme un angle λ d'environ 40° par rapport à l'axe principal A de la turbine 107. Cette portion de contact oblique 154 repose sur la surface externe 173a d'une saillie 173 avançant depuis le flasque 127 du premier étage rotorique 110a. Cette surface externe 173a s'étend selon la même inclinaison oblique que celle de la portion de contact 154 et forme donc le même angle λ d'environ 40° par rapport à l'axe principal A.

Ainsi, lorsque le premier étage rotorique 110a se dilate, la composante axiale de cette dilatation tend à faire descendre la virole 150 le long de la surface oblique 173a de la saillie 173, ce qui compense le mouvement ascendant de la virole 150 dû à la composante radiale de cette dilatation du premier étage rotorique 110a : la position radiale de la virole labyrinthe 150 reste ainsi sensiblement inchangée. Cette saillie 173 est de préférence symétrique de révolution par rapport à l'axe A de la turbine 107 et présente donc un profil constant sur toute la circonférence de la virole labyrinthe 150.

Le dispositif d'entraînement en rotation de la virole labyrinthe 150 est également différent de celui du premier exemple. Ici, des pattes 154 sont également portées par la virole labyrinthe 150 mais celles-ci se dirigent vers le disque 140 de l'étage rotorique aval 110b afin de coopérer avec des bossages 142 prévus sur la face amont de ce disque 140.

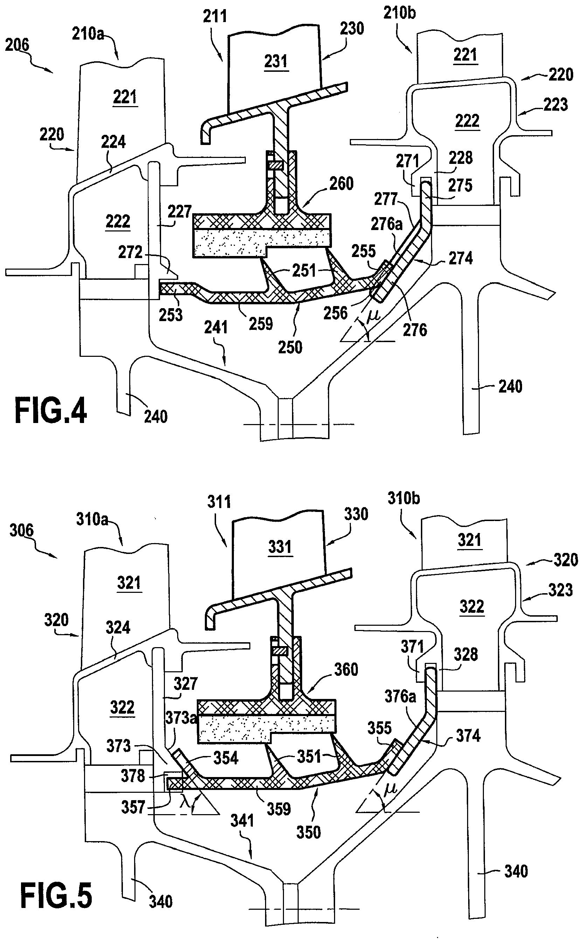

La FIG 4 illustre un troisième exemple d'ensemble rotatif 207 analogue en tout point au premier exemple sauf en ce qui concerne la virole labyrinthe 250 et son montage entre les étages rotoriques 210a et 210b, la virole labyrinthe 250 étant montée ici selon une configuration axial/oblique.

Dans ce troisième exemple, l'extrémité amont de la virole labyrinthe 250 est analogue à celle du premier exemple : elle comprend également une portion de contact du type axial 253 s'étendant axialement sous, c'est-à-dire plus à l'intérieur, une nervure 272 avançant axialement à partir du flasque 227 de l'étage rotorique amont 210a.

En revanche, son extrémité aval présente une configuration du type oblique d'une forme différente de celle du deuxième exemple. Ici, l'étage rotorique aval 210b comprend en outre une virole d'appui 274, à symétrie de révolution, qui comporte une portion d'accroche 275, s'étendant radialement et s'engageant dans une portion de crochet 271 analogue à celle du premier exemple, et une portion d'appui 276 oblique dont la surface externe 276a forme une surface d'appui oblique dont l'inclinaison forme un angle µ d'environ 55° par rapport à l'axe principal A de la turbine 207.

La virole labyrinthe 250 comporte quant à elle à son extrémité aval une portion de contact du type oblique 255 qui s'étend selon une direction oblique, dont l'inclinaison forme le même angle µ d'environ 55° par rapport à l'axe principal A, et repose sur la surface d'appui 276a de la virole d'appui 276. De manière analogue, cette surface d'appui oblique 276a permet d'obtenir une certaine compensation des déplacements radiaux de la virole 250 causés par les composantes radiale et axiale de la dilatation de l'étage rotorique 210b.

Le dispositif d'entraînement en rotation de la virole labyrinthe 250 est également différent de ceux des premier et deuxième exemples. Ici, des cannelures 256 et 277 correspondantes sont prévues respectivement sur la surface intérieure de la portion de contact oblique 255 de la virole labyrinthe 250 et sur la surface d'appui 276a de la virole d'appui 276.

La FIG 5 illustre un quatrième exemple d'ensemble rotatif 307 analogue en tout point au premier exemple sauf en ce qui concerne la virole labyrinthe 350 et son montage entre les étages rotoriques 310a et 310b, la virole labyrinthe 350 étant montée ici selon une configuration oblique/oblique.

Toutefois, dans ce quatrième exemple, l'extrémité amont de la virole labyrinthe 350 est analogue à celle du deuxième exemple : elle comprend également une portion de contact du type oblique 354, qui s'étend selon une direction oblique dont l'inclinaison forme un angle A d'environ 40° par rapport à l'axe principal A de la turbine 307, et repose sur la surface externe 373a d'une saillie 373 avançant depuis le flasque 327 du premier étage rotorique 310a.

L'extrémité aval de la virole labyrinthe 350 est quant à elle analogue à celle du troisième exemple : elle comprend également une portion de contact du type oblique 355, qui s'étend selon une direction oblique dont l'inclinaison forme le même angle µ d'environ 55° par rapport à l'axe principal A, et repose sur la surface d'appui 376a d'une virole d'appui 374 analogue à celle du troisième exemple.

Le dispositif d'entraînement en rotation de la virole labyrinthe 350 est encore différent dans ce quatrième exemple. Ici, des dents 357 avançant depuis la virole labyrinthe 350, plus précisément depuis l'intersection entre sa portion médiane 359 et sa portion de contact 354, engrènent dans des cannelures 378 du flasque 327. Ces cannelures sont de préférence ici usinées dans la portion inférieure de la saillie 373.

Dans chacun de ces exemples, la virole labyrinthe 50 est de préférence continue sur 360° de telle sorte qu'elle est auto-portée dans la turbine 7 autour de l'axe principal A. Il serait toutefois également possible de concevoir une virole labyrinthe 450 fendue ou sectorisée afin de simplifier son montage ou de réduire les contraintes mécaniques tangentielles.

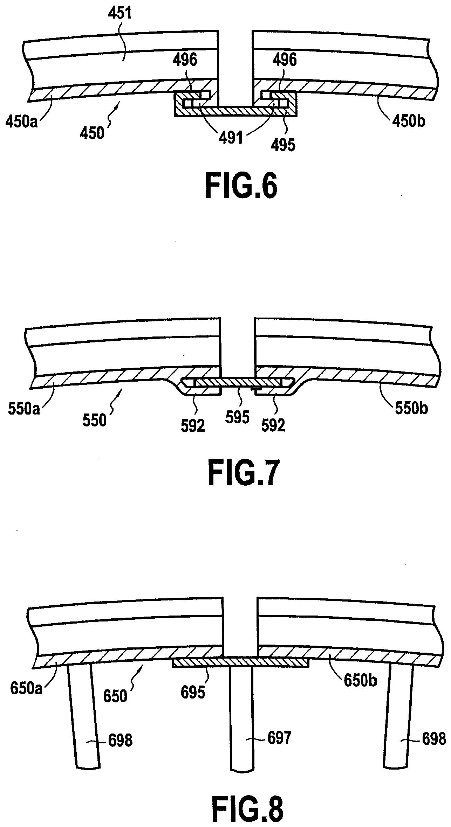

Néanmoins, dans un tel cas, il convient de mettre en place un dispositif de connexion étanche entre les secteurs 450a, 450b de la virole 450. De tels dispositifs sont présentés aux FIG 6 à 9.

Une première solution, représentée à la FIG 6, est celle d'une étanchéité sous forme de clips : il s'agit de créer des sur-longueurs 491 lors du tissage de la virole labyrinthe 450, celles-ci seront par la suite repliées afin de créer une accroche pour une plaquette 495 munie elle aussi de pattes repliées 496, cette plaquette 495 permettant d'assurer l'étanchéité.

Cette plaquette d'étanchéité 495 peut également être en CMC, ce qui limite les problématiques de dilatation différentielle ou de résistance à la température.

Lors de la mise en rotation, la plaquette d'étanchéité 495 vient se plaquer contre la virole labyrinthe 450, sous l'effet de la force centrifuge d'une part et sous l'effet de l'ouverture des secteurs 450a, 450b de la virole labyrinthe 450 d'autre part, et permet ainsi une bonne étanchéité.

Par ailleurs, la longueur des différentes accroches 491 est dimensionnée en fonction de l'ouverture maximale de l'espace séparant les secteurs 450a, 450b lors du fonctionnement afin qu'à tout moment du fonctionnement la plaquette 495 soit d'une part retenue par la virole 450 et qu'aucune surcontrainte ne soit d'autre part exercée sur la plaquette 495 lors de l'ouverture des secteurs 450a, 450b.

Un blocage axial peut être aménagé sous la forme d'une petite encoche sur les accroches 491 repliées de la virole labyrinthe 450.

Une seconde solution, représentée à la FIG 7, est celle d'une plaquette d'étanchéité 595 retenue par des déliaisons 592 de la virole labyrinthe 550 : cette solution est très similaire à la précédente et fonctionne de la même façon à ceci près que la plaquette 595 est cette fois retenue par des pattes 592 obtenues par déliaison de la structure tissée de la virole labyrinthe 550.

Une troisième solution met en oeuvre une plaquette 695 munie d'un pied 697. Sous l'effet de la force centrifuge, la plaquette 695 vient se plaquer contre les secteurs 650a, 650b de la virole labyrinthe, créant ainsi une étanchéité.

La rétention et l'entraînement en rotation de la plaquette 695 et des secteurs 650a, 650b peut être assurée à l'aide d'un dispositif d'accrochage crénelé analogue à celui décrit dans la demande de brevet français FR 13 57776 et représenté notamment sur les FIG 6 et 7 de cette demande : dans un tel dispositif d'accrochage crénelé, les pieds 697 et 698 de la plaquette 695 et des secteurs 650a, 650b de la virole labyrinthe 650 sont reçus entre les merlons du profil crénelé, aboutissant à un blocage axial et tangentiel de ces éléments tout en préservant leur liberté de mouvement selon la direction radiale.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention telle que définie dans les revendications.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention se limitant à l énoncé des revendications, et non pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Ensemble rotatif pour turbomachine, en particulier pour turbine ou compresseur, comprenant
un rotor comportant
- au moins deux étages rotoriques consécutifs (10a, 10b) munis d'une pluralité d'aubes mobiles (20), et
- une virole de rotor (50), annulaire, reliant lesdits deux étages rotoriques consécutifs (10a, 10b);
un stator comportant
- au moins un étage statorique (11), muni d'une pluralité d'aubes fixes (30), prévu entre lesdits deux étages rotoriques consécutifs (10a, 10b), et
- un anneau de stator (60), annulaire, monté sur lesdites aubes fixes (30) ;
dans lequel l'un (50) des éléments parmi la virole de rotor et l'anneau de stator porte au moins une léchette (51) configurée pour coopérer avec une piste abradable (62) portée par l'autre (60) desdits éléments ;
dans lequel la virole de rotor (50) comporte, à l'une au moins de ses extrémités amont et aval, une portion de contact oblique (154), c'est-à-dire inclinée par rapport à l'axe principal de l'ensemble rotatif, reposant sur une surface d'appui oblique (173a) de l'étage rotorique correspondant (10a), ladite surface d'appui oblique, inclinée par rapport à l'axe principal de l'ensemble rotatif, étant une surface externe (173a) d'une saillie (173) avançant depuis une partie de base (127) de l'étage rotorique correspondant (10a), la partie de base (127) étant le pied d'une aube mobile de l'étage rotorique correspondant (10a) ou un muret ou un flasque reliant les pieds des aubes mobiles de l'étage rotorique correspondant (10a),
dans lequel la portion de contact oblique (154) possède la même inclinaison (λ) que la surface d'appui oblique (173a) de l'étage rotorique correspondant (10a), et
**caractérisé en ce que** l'inclinaison (λ) de la portion de contact oblique (154) par rapport à l'axe principal (A) de l'ensemble rotatif (107) est comprise entre 35 et 75° de telle sorte que, lorsque l'étage rotorique se dilate sous l'effet de la chaleur, la portion de contact oblique (154) de la virole de rotor (50) glisse le long de la surface d'appui oblique (173a) de l'étage rotorique et redescend donc vers l'intérieur afin de contrôler et sensiblement annuler le déplacement radial total de la virole de rotor (50).

2. Ensemble rotatif selon la revendication 1, dans lequel le rotor est configuré de manière à bloquer axialement la virole de rotor (50) ou à la rappeler vers une position axiale stable.

3. Ensemble rotatif selon l'une quelconque des revendications 1 à 3, dans lequel l'inclinaison (λ) de la portion de contact oblique (154) par rapport à l'axe principal (A) de l'ensemble rotatif (107) est comprise entre 35 et 65°.

4. Ensemble rotatif selon l'une quelconque des revendications 1 à 3, dans lequel ladite saillie (173) avance depuis le pied de l'une des aubes mobiles ou depuis un muret ou un flasque (127) reliant les pieds des aubes mobiles.

5. Ensemble rotatif selon l'une quelconque des revendications 1 à 4, dans lequel ladite saillie (173) est une nervure annulaire.

6. Ensemble rotatif selon l'une quelconque des revendications 1 à 5, dans lequel la surface d'appui oblique d'un étage rotorique est une surface externe (276a) d'une virole d'appui (274) rapportée sur ou formant partie intégrante d'une partie de base (228) de l'étage rotorique (10b).

7. Ensemble rotatif selon la revendication 6, dans lequel la virole d'appui (274) comporte une portion d'extrémité (275) qui s'étend radialement vers l'extérieur et s'engage dans une portion de crochet (271) avançant axialement puis vers l'intérieur depuis la partie de base (228) de l'étage rotorique (10b).

8. Ensemble rotatif selon l'une quelconque des revendications 1 à 7, dans lequel le rotor comprend un dispositif d'entraînement (42, 54) permettant d'entraîner la virole de rotor (50) en rotation lorsque les étages rotoriques (10a, 10b) tournent.

9. Ensemble rotatif selon la revendication 8, dans lequel le dispositif d'entraînement comprend des saillies d'entraînement portées, pour certaines (42), par un élément (41) solidaire des étages rotoriques (10a, 10b) et, pour d'autres (54), par la virole de rotor (50) et configurées pour coopérer les unes avec les autres afin d'entraîner la virole de rotor (50) en rotation lorsque les étages rotoriques (10a, 10b) tournent.

10. Ensemble rotatif selon l'une quelconque des revendications 1 à 9, dans lequel la piste abradable (62) est portée par l'anneau de stator (60) et ladite au moins une léchette (51) est portée par la virole de rotor (50).

11. Ensemble rotatif selon l'une quelconque des revendications 1 à 10, dans lequel la virole de rotor (50) est réalisée en matériau composite à matrice céramique.

12. Ensemble rotatif selon l'une quelconque des revendications 1 à 11, dans lequel l'anneau de stator (60) est monté sur les aubes fixes (30) par l'intermédiaire d'un dispositif d'accrochage mettant en jeu
une pluralité de fentes radiales (66), chaque fente (66) étant pratiquée dans l'une parmi une patte radiale (63) de l'anneau de stator (60) et une patte radiale (35) solidaire des aubes fixes (31), et
une pluralité de pions (67), chaque pion (67) étant porté par l'autre parmi une patte radiale (63) de l'anneau de stator (60) et une patte radiale (35) solidaire des aubes fixes (30) et configuré pour s'engager dans une fente (66) correspondante desdites fentes radiales.

13. Ensemble rotatif selon la revendication 12, dans lequel l'anneau de stator (60) et la virole de rotor (50) possèdent des coefficients de dilatation thermique égaux à ±10%.

14. Turbomachine, comprenant un ensemble rotatif (7) selon l'une quelconque des revendications précédentes.

## Patentansprüche

1. Rotationsanordnung für eine Turbomaschine, insbesondere für eine Turbine oder einen Kompressor, umfassend
einen Rotor mit
- mindestens zwei aufeinanderfolgenden Rotorstufen (10a, 10b), die mit einer Vielzahl von beweglichen Schaufeln (20) versehen sind, und
- einem ringförmigen Rotormantel (50), der die beiden aufeinanderfolgenden Rotorstufen (10a, 10b) miteinander verbindet;
einen Stator mit
- mindestens einer Statorstufe (11), die mit einer Vielzahl von feststehenden Schaufeln (30) versehen ist und zwischen den beiden aufeinanderfolgenden Rotorstufen (10a, 10b) vorgesehen ist, und
- einem ringförmigen Statorring (60), der an den feststehenden Schaufeln (30) angebracht ist;
wobei eines (50) der Elemente von Rotormantel und Statorring mindestens eine Dichtlippe (51) trägt, die so konfiguriert ist, dass sie mit einer Verschleißbahn (62) zusammenwirkt, die von dem anderen (60) der Elemente getragen wird;
wobei der Rotormantel (50) an mindestens einem seiner stromaufwärtigen und stromabwärtigen Enden einen schrägen Kontaktabschnitt (154) aufweist, das heißt in Bezug auf die Hauptachse der Rotationsanordnung geneigt, der auf einer schrägen Auflagefläche (173a) der entsprechenden Rotorstufe (10a) aufliegt, wobei die schräge Auflagefläche, die in Bezug auf die Hauptachse der Rotationsanordnung geneigt ist, eine äußere Fläche (173a) eines Vorsprungs (173) ist, der von einem Basisabschnitt (127) der entsprechenden Rotorstufe (10a) vorsteht, wobei der Basisabschnitt (127) der Fuß einer beweglichen Schaufel der entsprechenden Rotorstufe (10a) oder eine Wand oder ein Flansch ist, die bzw. der die Füße der beweglichen Schaufeln der entsprechenden Rotorstufe (10a) verbindet,
wobei der schräge Kontaktabschnitt (154) die gleiche Neigung (λ) wie die schräge Auflagefläche (173a) der entsprechenden Rotorstufe (10a) aufweist, und
**dadurch gekennzeichnet, dass** die Neigung (λ) des schrägen Kontaktabschnitts (154) in Bezug auf die Hauptachse (A) der Rotationsanordnung (107) zwischen 35 und 75° beträgt, so dass, wenn sich die Rotorstufe unter Wärmeeinwirkung ausdehnt, der schräge Kontaktabschnitt (154) des Rotormantels (50) entlang der schrägen Auflagefläche (173a) der Rotorstufe gleitet und somit nach innen absinkt, um die gesamte radiale Verschiebung des Rotormantels (50) zu kontrollieren und im Wesentlichen aufzuheben.

2. Rotationsanordnung nach Anspruch 1, wobei der Rotor so konfiguriert ist, dass er den Rotormantel (50) axial blockiert oder in eine stabile axiale Position zurückführt.

3. Rotationsanordnung nach einem der Ansprüche 1 bis 3, wobei die Neigung (λ) des schrägen Kontaktabschnitts (154) in Bezug auf die Hauptachse (A) der Rotationsanordnung (107) zwischen 35 und 65° beträgt.

4. Rotationsanordnung nach einem der Ansprüche 1 bis 3, wobei der Vorsprung (173) von dem Fuß einer der beweglichen Schaufeln oder von einer Wand oder einem Flansch (127), die bzw. der die Füße der beweglichen Schaufeln verbindet, vorsteht.

5. Rotationsanordnung nach einem der Ansprüche 1 bis 4, wobei der Vorsprung (173) eine ringförmige Rippe ist.

6. Rotationsanordnung nach einem der Ansprüche 1 bis 5, wobei die schräge Auflagefläche einer Rotorstufe eine äußere Fläche (276a) eines Stützmantels (274) ist, der an einem Basisabschnitt (228) der Rotorstufe (10b) angebracht ist oder einen integralen Bestandteil eines Basisabschnitts (228) der Rotorstufe bildet.

7. Rotationsanordnung nach Anspruch 6, wobei der Stützmantel (274) einen Endabschnitt (275) umfasst, der sich radial nach außen erstreckt und in einen Hakenabschnitt (271) eingreift, der von dem Basisabschnitt (228) der Rotorstufe (10b) axial und dann nach innen vorsteht.

8. Rotationsanordnung nach einem der Ansprüche 1 bis 7, wobei der Rotor eine Antriebsvorrichtung (42, 54) umfasst, mit der der Rotormantel (50) in Drehung versetzt werden kann, wenn sich die Rotorstufen (10a, 10b) drehen.

9. Rotationsanordnung nach Anspruch 8, wobei die Antriebsvorrichtung Antriebsvorsprünge umfasst, die bei einigen (42) von einem Element (41), das fest mit den Rotorstufen (10a, 10b) verbunden ist, und bei anderen (54) von dem Rotormantel (50) getragen werden und so ausgebildet sind, dass sie derart miteinander zusammenwirken, dass sie den Rotormantel (50) in Drehung versetzen, wenn sich die Rotorstufen (10a, 10b) drehen.

10. Rotationsanordnung nach einem der Ansprüche 1 bis 9, wobei die Verschleißbahn (62) von dem Statorring (60) getragen wird und die wenigstens eine Dichtlippe (51) von dem Rotormantel (50) getragen wird.

11. Rotationsanordnung nach einem der Ansprüche 1 bis 10, wobei der Rotormantel (50) aus einem Verbundwerkstoff mit keramischer Matrix hergestellt wird.

12. Rotationsanordnung nach einem der Ansprüche 1 bis 11, wobei der Statorring (60) an den feststehenden Schaufeln (30) über eine Einhakvorrichtung befestigt ist, bei der Folgendes zum Einsatz kommt:
eine Vielzahl von radialen Schlitzen (66), wobei jeder Schlitz (66) in einer von einer radialen Lasche (63) des Statorrings (60) und einer mit den feststehenden Schaufeln (31) fest verbundenen radialen Lasche (35) ausgebildet ist, und
eine Vielzahl von Zapfen (67), wobei jeder Zapfen (67) von dem anderen von einer radialen Lasche (63) des Statorrings (60) und einer radialen Lasche (35), die fest mit den feststehenden Schaufeln (30) verbunden ist, getragen wird und so konfiguriert ist, dass er in einen entsprechenden Schlitz (66) der radialen Schlitze eingreift.

13. Rotationsanordnung nach Anspruch 12, wobei der Statorring (60) und der Rotormantel (50) auf ±10% gleiche Wärmeausdehnungskoeffizienten aufweisen.

14. Turbomaschine umfassend eine Rotationsanordnung (7) nach einem der vorstehenden Ansprüche.

## Claims

1. A rotor assembly for a turbine engine, in particular for a turbine or a compressor, comprising
a rotor comprising
- at least two consecutive rotor stages (10a, 10b) fitted with a plurality of mobile blades (20), and
- an annular rotor shroud (50) connecting said two consecutive rotor stages (10a, 10b);
a stator comprising
- at least one stator stage (11), fitted with a plurality of fixed blades (30), provided between said two consecutive rotor stages (10a, 10b), and
- a stator ring (60), annular, mounted on said fixed blades (30);
in which one (50) of the elements among the rotor shroud and the stator ring bears at least one wiper (51) configured to cooperate with an abradable track (62) carried by the other (60) of said elements;
- in which the rotor shroud (50) comprises, at one at least of its upstream and downstream ends, an oblique contact portion (154), that is to say inclined with respect to the main axis of the rotor assembly, resting on an oblique support surface (173a) of the corresponding rotor stage (10a), said oblique support surface, inclined with respect to the main axis of the rotor assembly, being an outer surface (173a) of a projection (173) advancing from a base part (127) of the corresponding rotor stage (10a), the base part (127) being the root of a mobile blade of the corresponding rotor stage (10a) or a low wall or a flange connecting the roots of the mobile blades of the corresponding rotor stage (10a),
in which the oblique contact portion (154) has the same inclination (λ) as the oblique support surface (173a) of the corresponding rotor stage (10a), and
**characterized in that** the inclination (λ) of the oblique contact portion (154) relative to the main axis (A) of the rotor assembly (107) is between 35 and 75° so that, when the rotor stage dilates under the effect of heat, the oblique contact portion (154) of the rotor shroud (50) slides along the oblique support surface (173a) of the rotor stage and therefore moves inwards and down to control and substantially cancel the total radial displacement of the rotor shroud (50).

2. The rotor assembly as claimed in Claim 1, in which the rotor is configured so as to axially block the rotor shroud (50) or draw it towards a stable axial position.

3. The rotor assembly as claimed in any one of Claims 1 to 3, in which the inclination (λ) of the oblique contact portion (154) relative to the main axis (A) of the rotor assembly (107) is between 35 and 65°.

4. The rotor assembly as claimed in any one of Claims 1 to 3, in which said projection (173) advances from the root of one of the mobile blades or from a low wall or a flange (127) connecting the roots of the mobile blades.

5. The rotor assembly as claimed in any one of Claims 1 to 4, in which said projection (173) is an annular groove.

6. The rotor assembly as claimed in any one of Claims 1 to 5, in which the oblique support surface of a rotor stage is an outer surface (276a) of a support shroud (274) connected to or forming an integral part of a base part (228) of the rotor stage (10b).

7. The rotor assembly as claimed in Claim 6, in which the support shroud (274) comprises an end portion (275) which extends radially outwards and engages in a hook part (271) advancing axially then inwards from the base part (228) of the rotor stage (10b).

8. The rotor assembly as claimed in any one of Claims 1 to 7, in which the rotor comprises a drive device (42, 54) for driving the rotor shroud (50) in rotation when the rotor stages (10a, 10b) turn.

9. The rotor assembly as claimed in Claim 8, in which the drive device comprises drive projections carried, for some (42), by an element (41) connected to the rotor stages (10a, 10b) and, for others (54), by the rotor shroud (50) and configured to cooperate with each other so as to drive the rotor shroud (50) in rotation when the rotor stages (10a, 10b) turn.

10. The rotor assembly as claimed in any one of Claims 1 to 10, in which the abradable track (62) is carried by the stator ring (60) and said at least one wiper (51) is carried by the rotor shroud (50).

11. The rotor assembly as claimed in any one of Claims 1 to 10, in which the rotor shroud (50) is made of composite material with ceramic matrix.

12. The rotor assembly as claimed in any one of Claims 1 to 11, in which the stator ring (60) is mounted on the fixed blades (30) by means of a fastening device involving
a plurality of radial slots (66), each slot (66) being made in one of a radial tab (63) of the stator ring (60) and a radial tab (35) connected to the fixed blades (31), and
a plurality of pins (67), each pin (67) being carried by the other of a radial tab (63) of the stator ring (60) or a radial tab (35) connected to the fixed blades (30) and configured to engage in a corresponding slot (66) of said radial slots.

13. The rotor assembly as claimed in Claim 12, in which the stator ring (60) and the rotor shroud (50) have thermal dilation coefficients equal to ±10%.

14. A turbine engine, comprising a rotor assembly (7) as claimed in any one of the preceding claims.
